# EUROPÄISCHE PATENTSCHRIFT

(11) **EP 1 819 576 B1**
(45) Veröffentlichungstag und Bekanntmachung des Hinweises auf die Patenterteilung: **26.08.2009**
(21) Anmeldenummer: 05813966.8
(22) Anmeldetag: 25.11.2005
(51) Int. Cl.: B62D 33/077, B62D 21/12

(54) **HILFSRAHMEN FÜR EINEN FAHRGESTELLRAHMEN EINES NUTZFAHRZEUGS**
SUBFRAME FOR A CHASSIS FRAME OF A UTILITY VEHICLE
FAUX CHASSIS POUR CADRE DE CHASSIS DE VEHICULE UTILITAIRE

(30) Priorität: 06.12.2004 DE 102004058831
(43) Veröffentlichungstag der Anmeldung: 22.08.2007
(73) Patentinhaber: Daimler AG, 70327 Stuttgart (DE)
(72) Erfinder: DÜRR, Rainer, 73249 Wernau (DE); MARTIN, Gerd, 70327 Stuttgart (DE)
(74) Vertreter: JENSEN & SON
(86) Internationale Anmeldenummer: PCT/EP2005/012616
(87) Internationale Veröffentlichungsnummer: WO 2006/061108

(56) Entgegenhaltungen:
- EP-A- 1 231 129
- DE-U1- 29 800 368
- FR-A- 1 483 189

## Beschreibung

Die Erfindung betrifft einen Hilfsrahmen für ein Nutzfahrzeug nach dem Oberbegriff des Anspruchs 1.

Nutzfahrzeuge, welche für den Transport von vorwiegend schweren Lasten vorgesehen sind, bestehen unter anderem aus einem Fahrgestellrahmen, auf welchem ein Aufbau für den Transport der Lasten angeordnet wird. Darüber hinaus dienen diese Fahrgestellrahmen auch der Aufnahme von speziell zu transportierenden Vorrichtungen, wie beispielsweise einer Mischtrommel bei einem Betonmischer oder eines Containers.

In der Regel werden die Aufbauten beziehungsweise hierfür vorgesehenen Hilfsrahmen nicht vom eigentlichen Hersteller des Nutzfahrzeugs bereitgestellt, sondern werden nachträglich individuell in Abhängigkeit des vorgesehenen Verwendungszwecks für das Nutzfahrzeug auf dessen Fahrgestellrahmen montiert. Hierzu müssen entsprechende Verbindungsmechanismen zwischen dem Hilfsrahmen und den Fahrgestellrahmen bereitgestellt werden.

Die Grundstruktur eines Hilfsrahmens besteht im Wesentlichen aus zwei parallel zueinander in Fahrzeuglängsrichtung verlaufenden Längsträgern zu beiden Seiten des Nutzfahrzeugs auf dem Fahrgestellrahmen, welche über mehrere Querträger verbunden sind. Zur Erhöhung der Stabilität können gegebenenfalls abschnittsweise zwischen den Längsträgern Diagonalkreuze vorgesehen werden, die sich aus zwei sich kreuzenden Schrägstreben zusammensetzen. Der Hilfsrahmen weist an mehreren Stellen Verbindungskonsolen auf, über welche seine Befestigung an dem Fahrgestellrahmen erfolgt. Die einzelnen Trägerstrukturen sind in der Regel als quadratische oder rechteckförmige Hohlträger aus Stahl ausgebildet.

Ein Hilfsrahmen ist beispielsweise aus dem deutschen Gebrauchsmuster DE 298 00 368 U1 bekannt. Der aus dieser Druckschrift bekannte Hilfsrahmen wird mit dem Hauptrahmen des Fahrgestells ausschließlich mittels Verschrauben verbunden, für die diverse Zwischenanbauteile und Zwischenwinkel sowie Flansche vorgesehen werden müssen, um entsprechende Verbindungsflächen zwischen den Längs- beziehungsweise Querträgern auszubilden.

Eine Rahmenstruktur, welche ebenfalls mit dem Fahrgestellrahmen verschraubt wird, ist aus der deutschen Offenlegungsschrift DE 196 25 380 A1 bekannt. Dieser Hilfsrahmen soll als Unterlage für einen Aufbau für beispielsweise einen Kasten, einen Tank oder eine Ladepritsche dienen, und wird über diverse Befestigungsorgane an den Längsträgern des Hilfsrahmens mit dem Fahrgestell verbunden. Hierbei sind an den Befestigungsorganen ausreichend Lochrasterungen in der Form einer Matrix vorgesehen, so dass eine Lagepositionierung gegenüber dem Fahrgestell in unterschiedlichen Positionen zum Ausgleich von Dimensionsabmessungen bei Fahrzeuggestellen unterschiedlicher Hersteller möglich ist.

Ein gattungsgemäßer Hilfsrahmen ist aus der Patentschrift FR 1 483 189 A bekannt.

Bei derartigen Hilfsrahmen ist es ein generelles Bestreben, Gewichtseinsparungen, wo möglich, zu erzielen, und dennoch die für das Tragen der von dem Nutzfahrzeug zu transportierenden Last ausreichende Stabilität zu gewährleisten. Darüber hinaus sollen in derartigen Hilfsrahmenstrukturen Schweißnähte vermieden werden, da sie bei den zu tragenden Lasten zu erheblichen Kerbwirkungen führen, welche ungünstigstenfalls zu einem Versagen führen.

Es ist eine Aufgabe der vorliegenden Erfindung, derartige Hilfsrahmen weiterzubilden und eine weitere Gewichtseinsparung bei zumindest gleichbleibender oder verbesserter Stabilität zu erzielen. Darüber hinaus soll unter Meidung von Schweißarbeiten in dem Hilfsrahmen eine günstigere Ableitung der von der zu tragenden Last herrührenden Kräfte ohne wesentliche.Verformungen innerhalb der einzelnen Komponenten des Hilfsrahmens ermöglicht werden.

Gelöst wird diese Aufgabe mit den Merkmalen des Patentanspruchs 1.

Kern der Erfindung ist demzufolge ein Hilfsrahmen für ein Nutzfahrzeug, bei welchem die zwei einander gegenüberliegenden Längsträger als durchgehende L-förmige Winkelprofile ausgebildet sind.

Hierbei bilden die horizontalen Schenkel der Winkelprofile der Längsträger die oberen Kanten des Hilfsrahmens und die vertikalen Schenkel der Winkelprofile die seitlichen, außen liegenden Kanten des Hilfsrahmens. Mit anderen Worten, stehen sich die beiden L-förmigen Winkelprofile einander gegensinnig gegenüber.

Die Verbindungsstege, mit Hilfe welcher der Hilfsrahmen auf einem Fahrgestellrahmen eines Nutzfahrzeugs befestigt werden soll, sind in einer Ausführungsform als separate, flache Stegbleche ausgebildet.

In einer bevorzugten Ausführungsform sind die Verbindungsstege mit den Längsträgern einstückig ausgebildet. Hierbei erstrecken sich die vertikalen Schenkel der Längsträger an bestimmten Stellen in einer solchen Länge, dass diese eine Anbindung an den Fahrgestellrahmen ermöglichen.

Die Höhen der Verbindungsstege bestimmen sich in Abhängigkeit des Fahrgestellrahmens, auf welchen der Hilfsrahmen zu befestigen ist. Ebenso werden die Positionen der einzelnen Verbindungsstege innerhalb der durchgehenden Längsträger an entsprechenden Stellen vorgesehen, so dass eine Übereinstimmung mit den an dem Fahrgestellrahmen vorgesehenen Lochrasterungen möglich ist.

Über eine unterschiedliche Ausgestaltung und insbesondere Auswahl an Höhen der Verbindungsstege lässt sich die Steifigkeit und. Festigkeit, insbesondere Biegefestigkeit, des Hilfsrahmens um die Fahrzeugquerachse beeinflussen. Das heißt, je nach von dem Hilfsrahmen zu tragender Last, können über eine Auswahl der Höhen der Verbindungsstege unterschiedliche Rahmenhöhen für den Hilfsrahmen festgelegt werden.

Über die Festlegung der Wandstärke des Bleches der Längsträger kann je nach vorgesehenem Einsatzzweck das Trägheitsmoment und auch das Widerstandsmoment des Gesamtlängsträgers, welcher sich aus dem Fahrgestellrahmen und dem Hilfsrahmen zusammensetzt, entsprechend beeinflusst werden. Mit anderen Worten, bei extrem schweren Lasten, die von dem Nutzfahrzeug mit einer derartigen Rahmenstruktur zu tragen sind, wird die Wandstärke der beiden L-förmigen Längsträger und/oder der anderen Bauteilelemente des Hilfsrahmens entsprechend erhöht.

Auf diese Art und Weise wird eine ausreichende Stabilität gewährleistet und gleichzeitig eine Gewichtseinsparung erzielt, da weder die durchgehenden Längsträger noch die einzelnen Verbindungsstege als beispielsweise U-förmige oder quadratische Hohlprofile ausgebildet sind.

Wie es bei derartigen Rahmenstrukturen üblich ist, kann zwischen den beiden Längsträgern zumindest ein Diagonalkreuz angeordnet sein.

In einer besonderen Ausführungsform gemäß der Erfindung ist das für einen solchen Hilfsrahmen vorgesehene Diagonalkreuz zweiteilig aufgebaut.

Es setzt sich aus einem oberen horizontalen Teilkreuz und einem unteren horizontalen Teilkreuz zusammen. Beide Teilkreuze lassen sich als einfache Blechschneideteile flächig ausstanzen. An entsprechenden Stellen sind innerhalb der Teilkreuze vertikal angeordnete Laschen vorgesehen. Das untere horizontale Teilkreuz weist dementsprechend nach oben weisende Laschen und das obere horizontale Teilkreuz an dann übereinstimmenden Stellen nach unten sich erstreckende Laschen auf. Die senkrechten Laschen werden in der einen Längshälfte des Teilkreuzes um eine halbe Blechstärke weiter nach außen abgebogen und in der anderen Längshälfte um eine Blechstärke weiter nach innen. So kann das Diagonalkreuz durch zwei gleiche Teilkreuze aufgebaut werden, indem man ein Teilkreuz um 180° um die Fahrzeugquerachse dreht und an den Laschen, welche entsprechende Lochrasterungen aufweisen, verschraubt.

Die Teilkreuze bestehen grundsätzlich aus zwei sich kreuzenden Schrägstreben, welche an beiden Längsenden durch Querstreben verbunden sind. Aufgrund der Tatsache, dass auch gemäß der Erfindung an den Querstreben entsprechende Laschen vorgesehen sind, wird bei dem zusammengebauten Diagonalkreuz, wenn das obere Teilkreuz mit dem unteren Teilkreuz über die einzelnen Laschen miteinander verschraubt wird, zu beiden Querseiten ein C-förmiger Winkelträger ausgebildet, der eine entsprechende Steifigkeit zwischen den beiden Längsträgern ausbildet.

Innerhalb der Diagonalkreuze lassen sich über unterschiedliche Längen der abgekanteten Laschen auch unterschiedliche Profilhöhen des gesamten Diagonalkreuzes bewerkstelligen. Hierdurch kann die Steifigkeit der Diagonalkreuze gezielt beeinflusst werden. So ist es prinzipiell möglich, die Profilhöhe der Diagonalkreuze innerhalb der Rahmenstruktur länger als die vertikalen Schenkel der Winkelprofile der Längsträger, kürzer oder mit übereinstimmender Länge auszugestalten.

Die Steifigkeit der Diagonalkreuze lässt sich nicht nur über unterschiedliche Profilhöhen realisieren, sondern auch über eine gezielt gewählte Lochrasterung in den senkrechten Laschen.

Innerhalb der Hilfsrahmenstruktur können auch mehrere Diagonalkreuze vorgesehen werden, um die Steifigkeit des Hilfsrahmens entsprechend zu beeinflussen. Dabei ist es denkbar, dass über die gesamte Länge unterschiedliche Diagonalkreuze vorgesehen werden, beispielsweise ein Diagonalkreuz, welches nur aus einem unteren oder einem oberen Teilkreuz besteht, sowie gebaute Diagonalkreuze mit unterschiedlichen Höhen.

Mit anderen Worten, über die Anzahl, die Art und die einzelnen Positionen der Diagonalkreuze kann die Torsionssteifigkeit und die Schubsteifigkeit des Hilfsrahmens in Abhängigkeit der von diesem zu tragenden Last beeinflusst werden.

Die Diagonalkreuze werden gemäß der Erfindung über U-förmigen Träger an den Längsträgern angebunden.

Die U-förmigen Träger liegen sich gegensinnig gegenüber derart, dass deren offenen Seiten aufeinander zeigen. Dabei kann der obere Schenkel der U-förmigen Träger an den-horizontalen Schenkeln der Längsträger zur Anlage kommen, während die vertikale Basis der U-förmigen Träger jeweils an den vertikalen Schenkeln der Längsträger oder an den Verbindungsstegen angebunden wird.

Die Diagonalkreuze werden mit den U-förmigen Trägern verbunden, indem zu deren beiden Seiten und vorzugsweise an jeder Ecke der Diagonalkreuze das obere Teilkreuz jeweils mit dem oberen Schenkel des U-förmigen Trägers und das untere Teilkreuz mit dem unteren Schenkel des U-förmigen Trägers verbunden werden.

Für die Verschraubung ragen die horizontalen Schenkel der U-förmigen Träger über die horizontalen Schenkel der Winkelprofile der Längsträger hinaus. An den Verbindungsstellen zu den Diagonalkreuzen sind entsprechende Lochrasterungen in den Diagonalkreuzen und den horizontalen Schenkeln der U-förmigen Träger vorgesehen.

In einer besonderen Ausführungsform des Hilfsrahmens gemäß der Erfindung sind zwischen den Verbindungsstellen, welche sich jeweils zwischen dem oberen Teilkreuz und dem oberen Schenkel des U-förmigen Trägers und dem unteren Teilkreuz und dem unteren Schenkel des U-förmigen Trägers ausbilden, Abstandshalter vorgesehen. Diese Abstandshalter werden an den Diagonalkreuzen über ein dafür vorgesehene Lochrasterung befestigt.

Die Verbindung der Diagonalkreuze mit den Längsträgern erfolgt letztendlich gemäß der Erfindung dadurch, dass mehrere vertikale Schrauben die Teilkreuze, Schenkel der U-förmigen Träger und die Abstandshalter durchgehend durchgreifen und diese Elemente miteinander verschrauben.

Grundsätzlich werden gemäß der Erfindung die Verbindungen zwischen den einzelnen Komponenten, das heißt den Längsträgern, den Verbindungsstegen, den Diagonalkreuzen, den U-förmigen Trägern, den Abstandshaltern und gegebenenfalls eventuellen Querträgern ausschließlich über Schraubverbindungen oder Nietverbindungen realisiert.

Es wird deutlich, dass der Hilfsrahmen mit derartigen Bauteilen in der Ausführungsform mit Verschraubungen einfach zu montieren und zu demontieren ist. Darüber hinaus lässt sich über die Verbindungsstege eine einfache Verbindung mit dem Fahrgestellrahmen bewerkstelligen.

Da der Hilfsrahmen aus einfachen Stanz- bzw. Biegeteilen aufgebaut ist, die lediglich aus einer Kombination von ebenen Blechen, U- und L-förmigen Winkelteilen bestehen, ist der Gestaltungsfreiheit des Hilfsrahmens hinsichtlich den vorgesehenen Einsatzbedingungen keine Grenze gesetzt. Die einfachen Teile sind darüber hinaus billig herzustellen, da hohe Werkzeugkosten entfallen.

Ein weiterer Vorteil des Hilfsrahmens gemäß der Erfindung liegt darin, dass je nach Einsatzbedingungen der Hilfsrahmen auch nachträglich auf einfache Art und Weise versteift werden kann, indem beispielsweise zusätzliche Diagonalkreuze eingebaut werden oder die oberen L-förmigen Winkelprofile der Längsträger mit entsprechenden Längsträgern mit dickerer Blechstärke ausgetauscht werden. Darüber hinaus können, da die Verbindungsstege und Winkelprofile der Längsträger mit den gleichen Längslochrasterungen wie der Fahrgestellrahmen versehen sind, die einzelnen Anbauteile mit einer großen vertikalen Abstützbasis angebunden werden.

Da sich das Material, welches für das Gewicht verantwortlich ist, hauptsächlich in den durchgehenden Längsträgern und damit in den oberen Kanten, beziehungsweise Randfasern, des Hilfsrahmens konzentriert, kann ein derart ausgestalteter Hilfsrahmen gegenüber der aus dem Stand der Technik bekannten herkömmlichen Bauart wesentlich leichter hergestellt werden.

Die vorliegende Erfindung soll nun anhand der in den beiliegenden Zeichnungen dargestellten Ausführungsbeispiele näher erläutert werden.

Dabei zeigen:
- Fig. 1: eine perspektivische Ansicht eines erfindungsgemä- ßen Hilfsrahmens mit seinen einzelnen Komponenten;
- Fig. 1a: eine perspektivische Ansicht einer speziellen Aus- führung des erfindungsgemäßen Hilfsrahmens;
- Fig. 2: eine schematische Schnittansicht von lediglich ei- ner Seite quer zu der Längsachse des Hilfsrahmens aus Fig. 1;
- Fig. 2a: eine schematische Schnittansicht von lediglich ei- ner Seite quer zu der Längsachse des Hilfsrahmens aus Fig. 1a;
- Fig. 3: eine perspektivische Ansicht eines zusammengebauten Diagonalkreuzes für einen derartigen Hilfsrahmen;
- Fig. 4: eine perspektivische Ansicht eines unteren horizon- talen Teilkreuzes für ein derartiges Diagonalkreuz; und;
- Fig. 5: eine perspektivische Ansicht eines Abstandshalters.

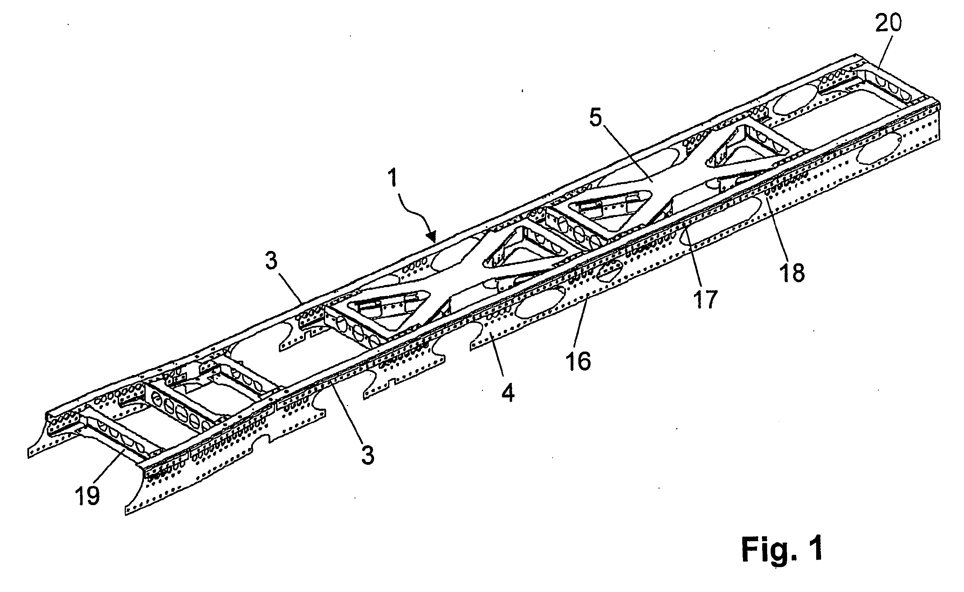

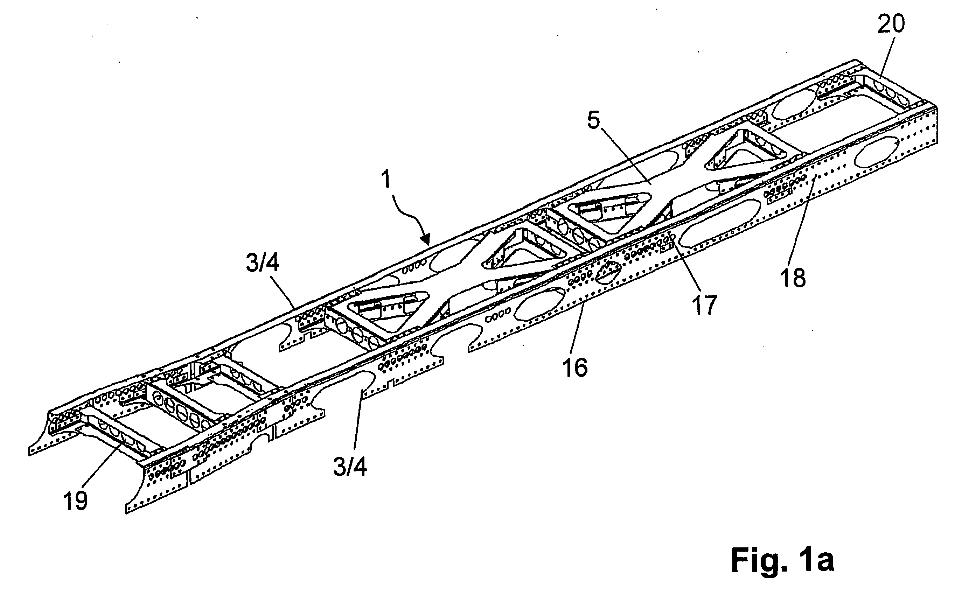

In Figur 1 ist schematisch in perspektivischer Ansicht ein Hilfsrahmen 1 gemäß der Erfindung gezeigt.

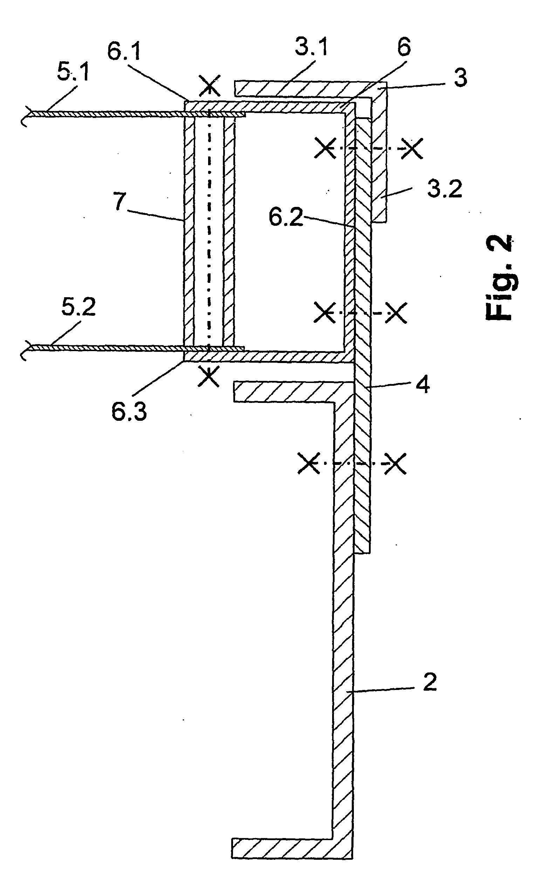

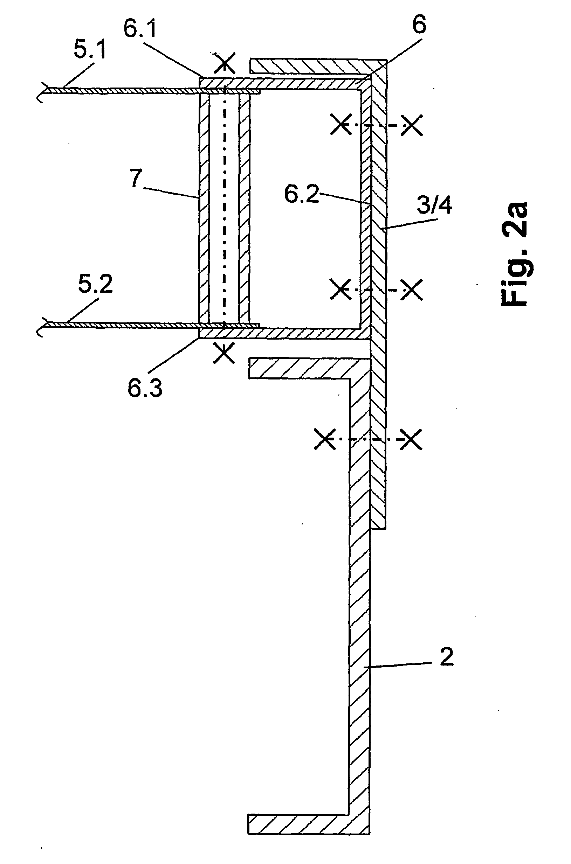

Dieser wird auf einem in der Figur 1 nicht gezeigten, in der Figur 2 mittels eines seiner Längsträger angedeuteten Fahrgestellrahmen 2 angeordnet.

Der Hilfsrahmen 1 besteht aus zwei einander gegenüberliegenden Längsträgern 3. Die Längsträger 3 sind, wie in der Figur 2 zu ersehen ist, als L-förmige Winkelprofile ausgestaltet.

Dabei sind die Längsträger 3 so innerhalb des Hilfsrahmens 1 angeordnet, dass die horizontalen Schenkel 3.1 der Längsträger jeweils die obere Kante des Hilfsrahmens 1 und die vertikalen Schenkel 3.2 des Längsträgers 3 die seitlichen, außen liegenden Kanten des Hilfsrahmens 1 bilden.

Der Hilfsrahmen 1 weist des Weiteren Verbindungsstege 4 auf, die zu beiden Seiten an den Längsträgern 3 angeordnet sind. Mittels der Verbindungsstege 4 wird der Hilfsrahmen 1 auf dem Fahrgestellrahmen 2 befestigt. Die vertikale Höhe der Verbindungsstege 4 ist in Abhängigkeit der Einsatzbedingungen des Hilfsrahmens 1 dabei so gewählt, dass er eine Anbindung an den Längsträger des Fahrgestellrahmens 2 gestattet.

Wie in Figur 1 zu ersehen ist, sind die Verbindungsstege 4 über die Länge des Hilfsrahmens 1 beziehungsweise der Längsträger 3 verteilt.

Wie in Figur 2 zu ersehen ist, können an die Verbindungsstege 4 U-förmige Träger 6 angebunden werden. Eine vertikale Basis 6.2 der U-förmigen Träger 6 wird hierzu mittels Lochrasterungen 17 und 18 mit den Verbindungsstegen 4 verschraubt.

Der Hilfsrahmen 1 weist darüber hinaus mehrere Diagonalkreuze 5 auf, welche zwischen den Längsträgern 3 angeordnet sind.

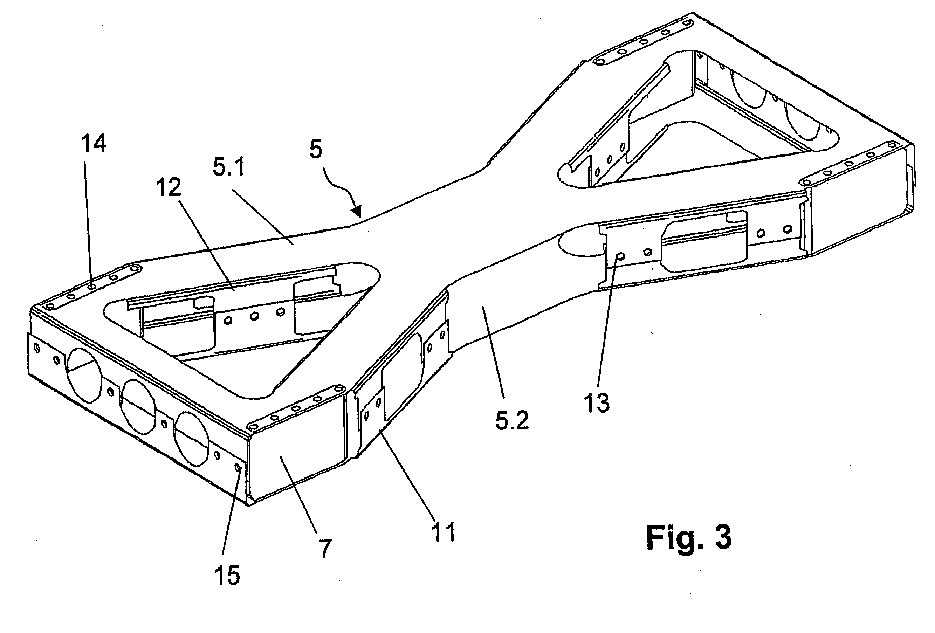

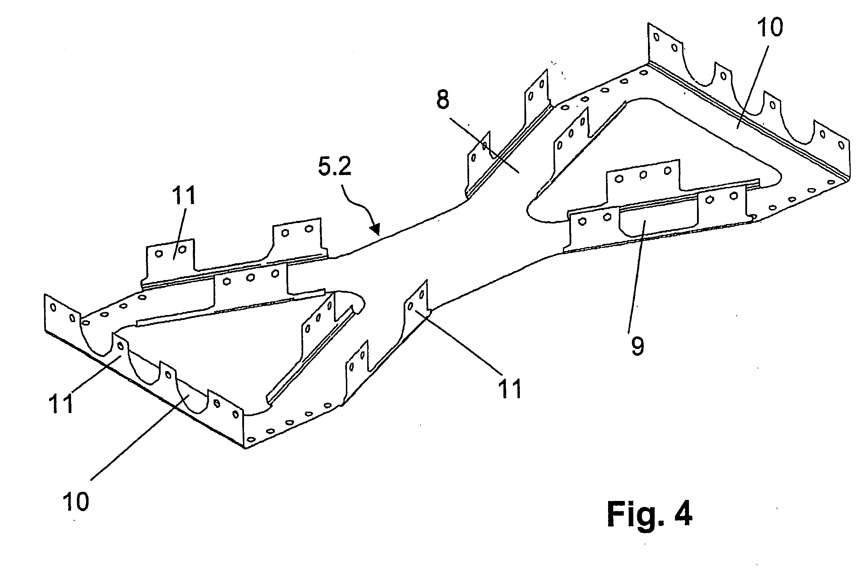

Wie aus Figur 3 zu ersehen ist, besteht das Diagonalkreuz 5 aus einem oberen horizontalen Teilkreuz 5.1 und einem unteren horizontalen Teilkreuz 5.2. Wie in Figur 4 anhand des unteren horizontalen Teilkreuzes 5.2 zu ersehen ist, werden die Teilkreuze als Blechformteile geschnitten beziehungsweise gestanzt und gebogen.

Das unter Teilkreuz 5.2 weist an Stellen seiner beiden Schrägstreben 8 beziehungsweise 9 sowie an den Querstreben 10 Laschen 11 auf, welche vertikal nach oben abragen. An korrespondierenden Stellen des oberen horizontalen Teilkreuzes 5.1 sind nach unten ragende Laschen 12 vorgesehen. Im zusammengebauten Zustand kommen die Laschen 11 und 12 mit den in diesen vorgesehenen Lochrasterungen 13 einander zur Deckung, so dass eine Schraubverbindung oder Nietverbindung zwischen diesen ausgebildet werden kann.

Bei den Querstreben 10 bilden sich dann zwischen den Längsträgern 3, wie in der Figur 3 ersichtlich, steifigkeitserhöhende, C-förmige Winkelprofile innerhalb des Diagonalkreuzes 5 aus.

Ein derart gebautes Diagonalkreuz 5 wird zwischen den Längsträgern 3 angeordnet, indem das obere horizontale Teilkreuz 5.1, welches an entsprechenden Stellen eine Lochrasterung 14 aufweist, jeweils zu beiden Seiten mit den oberen horizontalen Schenkeln 6.1 des horizontal liegenden U-förmigen Trägers 6 und das untere horizontale Teilkreuz 5.2 mit den unteren horizontalen Schenkeln 6.3 des horizontal liegenden U-förmigen Trägers 6 verschraubt wird, wie aus der Figur 2 ersichtlich wird.

Zwischen den Verbindungsstellen, welche sich zwischen den Teilkreuzen 5.1. bzw. 5.2 und den Schenkeln 6.1. bzw. 6.3 ausbilden, ist ein sich vertikal erstreckender Abstandshalter 7 angeordnet, wobei diese Elemente mittels vertikal durchgehenden Schrauben miteinander verschraubt werden.

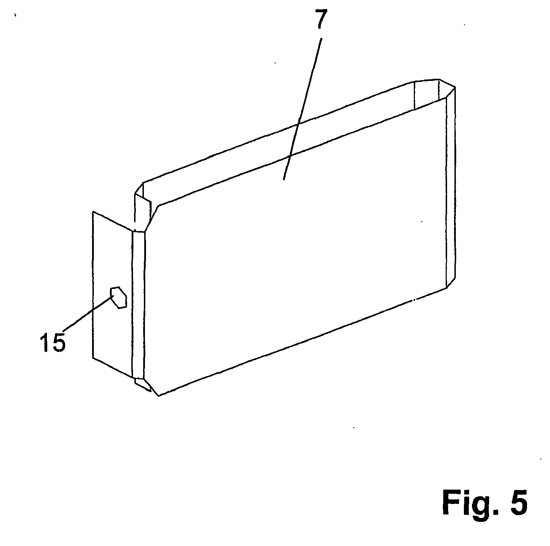

Wie aus der Figur 3 und der Figur 5 zu ersehen ist, wird der vertikale Abstandshalter 7 an einer Lochrasterung 15 mit der korrespondierenden Lochrasterung des oberen Teilkreuzes 5.1 und des unteren Teilkreuzes 5.2 verschraubt.

Die Verbindungsstege 4 weisen an entsprechenden Stellen Lochrasterungen 16 auf, die mit entsprechenden Lochrasterungen an dem Fahrgestellträger zur Deckung kommen, um eine entsprechende Schraub- beziehungsweise Nietverbindung ausbilden zu können. Darüber hinaus ist sowohl an den Längsträgern 3 als auch an den Verbindungsstegen 4 eine entsprechende Lochrasterung 17 vorgesehen, um zwischen diesen beiden Komponenten die Verbindung realisieren zu können.

Zur weiteren Verstärkung können z. B. Querträger 19 und 20 zum Einsatz kommen, die z. B. C-förmig ausgestaltet sind, und mit den horizontalen Schenkeln 6.1 und 6.3 der U-förmigen Träger 6 verbunden werden.

Die Figuren 1a und 2a zeigen eine weitere Ausführungsform des Hilfsrahmens 1 gemäß der Erfindung. Bei dieser sind die Längsträger 3 und die Verbindungsstege 4 einstückig ausgebildet. Dementsprechend kommt die vertikale Basis 6.2 des U-förmigen Trägers 6 direkt an dem Längsträger 3/4 zum Anliegen.

Es wird deutlich, dass die einzelnen Komponenten des Hilfsrahmens 1 sowie die an entsprechenden Stellen vorgesehenen Lochrasterungen sowohl hinsichtlich der Längsachse als auch der Querachse unterschiedliche Montagekonstellationen ermöglichen. Darüber hinaus kann über die Verwendung der einzelnen Komponenten hinsichtlich ihrer Anzahl, ihrer Position und ihrer einzelnen Dimensionsausbildung die Steifigkeit und Festigkeit des Hilfsrahmens 1 definiert festgelegt werden, um diesen in Abhängigkeit einerseits des vorgegebenen Fahrgestellrahmens 2 und andererseits der aufzunehmenden Last bei der Montage gezielt einstellen zu können.

## Patentansprüche

1. Hilfsrahmen (1) für ein Nutzfahrzeug mit zwei einander gegenüberliegenden Längsträgern (3), welche durch Querträger (19, 20) miteinander verbunden sind und **dadurch** in einem Abstand gehalten werden, wobei die Längsträger (3) jeweils über mehrere Verbindungsstege (4) auf einem Fahrgestellrahmen (2) des Nutzfahrzeugs befestigbar sind, wobei die Längsträger (3) als durchgehende L-förmige Winkelprofile mit einem horizontalen Schenkel (3.1) und einem vertikalen Schenkel (3.2) ausgebildet sind, wobei sich die Längsträger (3) gegensinnig so einander gegenüberliegen, dass jeweils die horizontalen Schenkel (3.1) der Winkelprofile die oben liegenden Kanten des Hilfsrahmens (1) und die vertikalen Schenkel (3.2) der Winkelprofile die seitlichen, außen liegenden Kanten des Hilfsrahmens (1) bilden, **dadurch gekennzeichnet, dass** U-förmige Träger (6) vorgesehen sind, welche sich gegensinnig so einander gegenüberliegen, dass ihre offenen Seiten nach innen gerichtet sind, wobei die oberen Schenkel (6.1) der U-förmigen Träger (6) jeweils an dem horizontalen Schenkel (3.1) der Längsträger (3) innenseitig zum Anliegen kommen.

2. Hilfsrahmen nach Anspruch 1, bei welchem zwischen den vertikalen Schenkeln (3.2) der Längsträger (3) und den U-förmigen Trägern (6) die Verbindungsstege (4) angeordnet sind.

3. Hilfsrahmen nach Anspruch 1, bei welchem die vertikalen Schenkel (3.2) und die Verbindungsstege (4) einstückig ausgebildet sind.

4. Hilfsrahmen nach einem der Ansprüche 1 bis 3, bei welchem zwischen den Längsträgern (3) zumindest ein Diagonalkreuz (5) angeordnet ist.

5. Hilfsrahmen nach Anspruch 4, bei welchem das Diagonalkreuz (5) zweiteilig ausgebildet ist und aus einem oberen horizontalen Teilkreuz (5.1) und einem unteren horizontalen Teilkreuz (5.2) besteht, welche miteinander über an dem oberen horizontalen Teilkreuz (5.1) und an dem unteren horizontalen Teilkreuz (5.2) jeweils an korrespondierenden Stellen vertikal angeordneten Laschen (11, 12) verbindbar sind.

6. Hilfsrahmen nach Anspruch 5, bei welchem die Laschen (11, 12) an dem oberen horizontalen Teilkreuz (5.1) und an dem unteren horizontale Teilkreuz (5.2) derart angeordnet sind, dass bei dem zusammengebauten Diagonalkreuz (5) zumindest abschnittsweise C-förmige Profile ausgebildet sind.

7. Hilfsrahmen nach einem der Ansprüche 4 bis 6, bei welchem zu beiden Seiten das obere horizontale Teilkreuz (5.1) mit dem oberen Schenkel (6.1) des U-förmigen Trägers (6) und das untere horizontale Teilkreuz (5.2) mit dem unteren Schenkel (6.3) des U-förmigen Trägers (6) verbindbar ist.

8. Hilfsrahmen nach Anspruch 7, bei welchem zwischen den Verbindungsstellen der Teilkreuze (5.1, 5.2) und der Schenkel (6.1, 6.3) der U-förmigen Träger (6) Abstandshalter (7) angeordnet sind.

9. Hilfsrahmen nach Anspruch 8, bei welchem die Teilkreuze (5.1, 5.2), die Schenkel (6.1, 6.3) der U-förmigen Träger (6) und die Abstandshalter (7) von einem durchgehenden Verbindungsmittel durchsetzt sind.

10. Hilfsrahmen nach Anspruch 8 oder 9, bei welchem die Abstandshalter (7) mit den Teilkreuzen (5.1, 5.2) verbindbar sind.

11. Hilfsrahmen nach einem der vorhergehenden Ansprüche, bei welchem die einzelnen Elemente (3,4,5,5.1,5.2,6,7) miteinander verschraubt oder vernietet sind.

## Claims

1. Subframe (1) for a utility vehicle, with two longitudinal members (3) opposite one another, which are connected together by cross-members (19, 20) and thereby kept a distance apart, such that the said longitudinal members (3) can be fixed onto a chassis frame (2) of the utility vehicle by means of a plurality of connecting webs (4), the longitudinal members (3) being in the form of continuously extending, L-shaped angle sections with a horizontal arm (3.1) and a vertical arm (3.2), the longitudinal members (3) being positioned opposite one another in mirror-image relationship such that in each case the horizontal arm (3.1) of the angle sections form the top edges of the subframe (1) and the vertical arms (3.2) of the angle sections form the lateral, outside edges of the subframe (1), **characterised in that** U-shaped supports (6) are provided, which are positioned opposite one another facing in opposite directions such that their open sides face inwards, and the upper arm (6.1) of the U-shaped support is in each case in contact on the inside with the horizontal arm (3.1) of the longitudinal member (3).

2. Subframe according to Claim 1, in which the connecting webs (4) are arranged between the vertical arms (3.2) of the longitudinal members (3) and the U-shaped supports (6).

3. Subframe according to Claim 1, in which the said vertical arms (3.2) and the connecting webs (4) are formed integrally.

4. Subframe according to any of Claims 1 to 3 in which at least one diagonal cross (5) is arranged between the longitudinal members (3).

5. Subframe according to Claim 4, in which the diagonal cross (5) is made in two parts and consists of an upper horizontal part-cross (5.1) and a lower horizontal part-cross (5.2) which can be joined to one another by means of vertical tongues (11, 12) arranged at respectively corresponding points on the said upper horizontal part-cross (5.1) and the said lower horizontal part-cross (5.2).

6. Subframe according to Claim 5, in which the tongues (11, 12) on the upper horizontal part-cross (5.1) and on the lower horizontal part-cross (5.2) are arranged in such manner that when the diagonal cross (5) is assembled, C-shaped profiles are formed at least in some sections.

7. Subframe according to any of Claims 4 to 6, in which, on both sides the upper horizontal part-cross (5) can be connected to the upper arm (6.1) of the U-shaped support (6) and the lower horizontal part-cross (5.2) can be connected to the lower arm (6.3) of the U-shaped support (6).

8. Subframe according to Claim 7, in which spacers (7) are arranged between the connection points of the part-crosses (5.1, 5.2) and the arms (6.1, 6.3) of the U-shaped support (6).

9. Subframe according to Claim 8, in which continuous connection means extend through the part-crosses (5.1, 5.2), the arms (6.1, 6.3) of the U-shaped support and the spacers (7).

10. Subframe according to Claims 8 or 9, in which the spacers (7) can be connected to the part-crosses (5.1, 5.2).

11. Subframe according to any of the preceding claims, in which the individual elements (3, 4, 5, 5.1, 5.2, 6, 7) are bolted or riveted to one another.

## Revendications

1. Faux-châssis (1) pour un véhicule utilitaire avec deux longerons (3) opposés, qui sont reliés l'un à l'autre par des traverses (19, 20) et qui sont ainsi maintenus à distance, chacun des longerons (3) pouvant être fixé sur un cadre (2) de châssis du véhicule utilitaire par plusieurs nervures de liaison (4), les longerons (3) ayant la forme de profilés angulaires en forme de L d'un seul tenant avec une branche (3.1) horizontale et une branche (3.2) verticale, les longerons (3) étant disposés les uns en face des autres de manière à ce que chacune des branches horizontales (3.1) des profilés angulaires forment les bords supérieurs du faux-châssis (1) et que les branches verticales (3.2) des profilés angulaires forment les bords latéraux, extérieurs du faux-châssis (1), il est prévu des éléments porteurs (6) en forme de U, qui sont situés les uns en face des autres de manière à ce que leurs côtés ouverts soient orientés vers l'intérieur, les branches supérieures (6.1) de l'élément porteur (6) en forme de U viennent en appui sur chaque branche horizontale (3.1) des longerons (3) du côté interne.

2. Faux-châssis selon la revendication 1, sur lequel les nervures de liaison (4) sont disposées entre les branches verticales (3.2) des longerons (3) et les éléments porteurs (6) en forme de U.

3. Faux-châssis selon la revendication 1, sur lequel les branches verticales (3.2) et les nervures de liaison (4) sont conçues d'un seul tenant.

4. Faux-châssis selon l'une quelconque des revendications 1 à 3, sur lequel au moins une croix diagonale (5) est disposée entre les longerons (3)

5. Faux-châssis selon la revendication 4, sur lequel la croix diagonale (5) est formée de deux parties et comprend une croix partielle (5.1) horizontale supérieure et une croix partielle (5.2) horizontale inférieure, lesquelles peuvent être reliées l'une à l'autre par des pattes (11, 12) disposées verticalement à des endroits correspondants sur la croix partielle (5.1) horizontale supérieure et sur la croix partielle (5.2) horizontale inférieure.

6. Faux-châssis selon la revendication 5, sur lequel les pattes (11, 12) sont disposées sur la croix partielle (5.1) horizontale supérieure et sur la croix partielle (5.2) horizontale inférieure de manière telle qu'au moins des profilés partiellement en forme de C soient formés lorsque la croix diagonale (5) est formée.

7. Faux-châssis selon l'une quelconque des revendications 4 à 6, sur lequel de chaque côté la croix partielle (5.1) horizontale supérieure peut être reliée à la branche supérieure (6.1) de l'élément porteur (6) en forme de U et la croix partielle (5.2) horizontale inférieure peut être reliée à la branche (6.3) inférieure de l'élément porteur (6) en forme de U.

8. Faux-châssis selon la revendication 7, sur lequel des entretoises (7) sont disposées entre les points de jonction des croix partielles (5.1, 5.2) et les branches (6.1, 6.3) des éléments porteurs (6) en forme de U.

9. Faux-châssis selon la revendication 8, sur lequel les croix partielles (5.1, 5.2), les branches (6.1, 6.3) des éléments porteurs (6) en forme de U et les entretoises (7) sont traversées de bout en bout par un élément de liaison.

10. Faux-châssis selon la revendication 8 ou 9, sur lequel les entretoises (7) peuvent être reliées aux croix partielles (5.1, 5.2).

11. Faux-châssis selon l'une quelconque des revendications précédentes, sur lequel chacun des éléments (3, 4, 5, 5.1, 5.2, 6, 7) est vissé ou riveté l'un avec l'autre.
